# EUROPÄISCHE PATENTANMELDUNG

(11) **EP 2 684 642 A2**
(43) Veröffentlichungstag der Anmeldung: **15.01.2014**
(21) Anmeldenummer: 13176286.6
(22) Anmeldetag: 12.07.2013
(51) Int. Cl.: B23Q 3/152, B23B 31/163, B23Q 3/18

(54) **Magnetspannvorrichtung**

(30) Priorität: 12.07.2012 DE 202012102578 U
(71) Anmelder: Wagner Magnete GmbH & Co. KG, 87751 Heimertingen (DE); Röhm GmbH, 89567 Sontheim/Brenz (DE)
(72) Erfinder: Barabas, Stefan, 86690 Mertingen (DE); Weinbuch, Rudolf, 88299 Leutkirch (DE)
(74) Vertreter: Pfister, Stefan Helmut Ulrich

(57) **Zusammenfassung**

Die Erfindung betrifft eine Magnetspannvorrichtung mit einer Spannfläche, wenigstens einem magnetisch wirkenden Spannmittel zum Aufspannen eines Werkstückes auf der Spannfläche und einer Zentrier- vorrichtung zum Zentrieren des Werkstückes mit zwei oder mehr in der Spannfläche verschiebbaren Spannbacken, dadurch gekennzeichnet, dass der Zentriervorrichtung (11) ein einen Stator (2) und einen Rotor (1) aufweisender elektrischer Rotationsantrieb (12) mit einer Rotationsachse (A) zugeordnet ist und die Zentrier- vorrichtung (11) Mittel zum Ableiten von linearen Spann- backenbewegungen aus einer Rotationsbewegung des Rotationsantriebes (12) aufweist, und die linearen Spannbackenbewegungen senkrecht zur Rotationsachse (A) sind.

## Beschreibung

Die Erfindung betrifft eine Magnetspannvorrichtung mit einer Spannfläche, wenigstens einem magnetisch wirkenden Spannmittel zum Aufspannen eines Werkstückes auf der Spannfläche und eine Zentriervorrichtung zum Zentrieren des Werkstückes.

Bekannte Magnetspannvorrichtungen weisen eine Spannfläche mit magnetisch wirkenden Spannmitteln zum Aufspannen eines Werkstückes auf der Spannfläche auf und verfügen zudem über Zentriervorrichtungen, die vor dem magnetischen Spannen und Festlegen des zu bearbeitenden Werkstückes auf der Spannfläche die Zentrierung des Werkstückes durchführen. Die Zentriervorrichtung weist hierzu in der Spannfläche verschiebbare Spannbacken auf. Herkömmliche magnetische Spannvorrichtungen verfügen dabei über Zentriervorrichtungen, in denen jeder Spannbacke ein eigener Linearantrieb zugeordnet ist. Dieser Linearantrieb kann beispielsweise als einen Spindeltrieb aufweisender Elektromotor ausgebildet sein. Gleichzeitig besteht die Möglichkeit, dass jeder Spannbacke ein eigener hydraulischer oder pneumatischer Antrieb zugeordnet ist, über den das Verschieben der Spannbacken und damit das Zentrieren des Werkstückes auf der Spannfläche durchgeführt wird.

Nachteil weiterer bekannter Magnetspannvorrichtungen ist es, dass die Anordnung von mehreren Linearantrieben an den verschiebbaren Spannbacken einen wesentlich erhöhten Steuerungsaufwand mit sich bringt. Bei der Verwendung hydraulischer oder pneumatischer Spannbackenantriebe bzw. Spannbacken oder Zentriervorrichtungen erweist es sich als nachteilig, dass bei einer rotativen Bearbeitung des Werkstückes auf die für den Antrieb der Spannbacken notwendigen Leitungen für das Hydraulik- bzw. Pneumatikmedium Rücksicht genommen werden muss. Derartige Magnetspannvorrichtungen weisen daher einen wesentlich erhöhten Konstruktions- und Montageaufwand auf.

Die mit einzelnen Antrieben ausgestatteten Spannbacken müssen zudem vor dem Zentrieren des Werkzeuges in einem aufwendigen Synchronisierschritt abgestimmt werden.

Aufgabe der vorliegenden Erfindung ist es daher, eine Magnetspannvorrichtung zur Verfügung zu stellen, die einen vereinfachten Aufbau aufweist.

Die Aufgabe wird gelöst durch die eingangs beschriebene Magnetspannvorrichtung. Diese weist eine Spannfläche auf und verfügt über wenigstens ein magnetisch wirkendes Spannmittel zum Aufspannen eines Werkstückes auf der Spannfläche. Zudem verfügt die Magnetspannvorrichtung über eine Zentriervorrichtung zum Zentrieren des Werkstückes mit zwei oder mehr in der Spannfläche verschiebbaren Spannbacken. Der Zentriervorrichtung ist dabei ein einen Stator und einen Rotor aufweisender elektrischer Rotationsantrieb mit einer Rotationsachse zugeordnet. Die Zentriervorrichtung verfügt über Mittel zum Ableiten von linearen Spannbackenbewegungen aus einer Rotationsbewegung des Rotationsantriebes. Die lineare Spannbackenbewegung erfolgt dabei senkrecht zur Rotationsachse. Der Begriff "senkrecht zur Rotationsachse" umfasst dabei auch Bewegungen, die zumindest einen Anteil der Spannbackenbewegung in eine Richtung senkrecht zur Rotationsachse aufweisen, also auch einen spitzen Winkel (z.B. 15°, 30°, 45° oder 60° - als untere Intervallgrenze - bis 90° als obere Intervallgrenze) mit der Rotationsachse einschließt. Die Spannbackenbewegung erfolgt dabei in der Drehebene des Rotationsantriebes. Die Drehebene ist dabei eine Ebene, die senkrecht auf der Rotationsachse angeordnet ist.

Vorteil der erfindungsgemäß ausgeführten Magnetspannvorrichtung ist es, dass lediglich ein elektrischer Rotationsantrieb vorgesehen werden muss, um ein synchrones Verschieben der Spannbacken der Zentriervorrichtung durchzuführen. Die Spannbackenbewegung leitet sich dabei aus der Rotationsbewegung des Rotationsantriebes ab. Als vorteilhaft wird in diesem Zusammenhang angesehen, wenn die Ableitung der linearen Spannbackenbewegung senkrecht zur Rotationsachse vorgesehen ist. Dadurch erfolgt bei Rotation des Rotors bzw. Stators des Rotationsantriebs eine Radialverschiebung der Spannbacken in der Spannfläche. Hierdurch kann ein Werkstück auf der Spannfläche zentriert bzw. positioniert werden. Das Spannen der Werkstücke für die Bearbeitung wird in der Regel hauptsächlich über die magnetischen Spannmittel realisiert. Ein weiterer Vorteil des erfindungsgemäßen Aufbaus ist es, dass die Spannbackenbewegung in der Dreh- bzw. Rotationsebene des Rotationsantriebes erfolgt. Die Drehebene bleibt dabei positionsfest, eine Axialbewegung des Rotationsantriebes ist nicht notwendig. Die fehlende Axialbewegung begünstigt zudem eine kompaktere Bauweise der Gesamtvorrichtung, da kein Raum für die Axialbeweglichkeit eines Antriebskolbens oder dergleichen, wie dies beispielsweise im Stand der Technik notwendig ist, vorgesehen werden muss. Der Aufbau der Vorrichtung kann daher sehr flach gehalten werden. Der erfindungsgemäße Vorschlag ist daher kostengünstig, da nur ein zentral für alle Spannbackenbewegungen vorgesehener Elektroantrieb eingesetzt wird. Des Weiteren hat der erfindungsgemäße Vorschlag den Vorteil, dass durch die Verwendung eines elektrisch wirkenden Antriebes sowohl die Zentriervorrichtung als auch der Rotationsantrieb beaufschlagt werden können. Eine solche Ausführungsform ist natürlich auch ausgesprochen platzsparend und erlaubt so eine kompakte, das heißt, auch kleinbauende Ausgestaltung einer erfindungsgemäßen Magnetspannvorrichtung.

Gleichwohl kann die Magnetspannvorrichtung dahin weitergebildet werden, dass eine Spann- bzw. Haltekraft zusätzlich oder alternativ über die durch den Rotationsantrieb angetriebenen Spannbacken eingetragen wird. Um vergleichbare Haltekräfte bzw. Spannkräfte zur Verfügung zu stellen, ist dann der Rotationsantrieb entsprechend dimensioniert oder es werden geeignete Getriebe für eine Drehmomentumsetzung eingesetzt.

Über die Zentriervorrichtung kann somit neben dem bloßen Zentrieren auch (zusätzlich) ein Spannen der Werkstücke durchgeführt werden. Dies erweist sich insbesondere bei zu spannenden Werkstücken als vorteilhaft, die nicht oder nur schwer magnetisierbar sind.

Ist eine ausschließliche Verwendung der Zentriervorrichtung zum Zentrieren des Werkstückes vorgesehen, so kann der verwendete Rotationsantrieb entsprechend schwächer dimensioniert werden, sowohl baulich, als auch bezüglich der Leistungsaufnahme. Dies bringt wiederum Vorteile bei der Montage der Magnetspannvorrichtung mit sich und senkt gleichzeitig die für die Magnetspannvorrichtung bzw. deren Herstellung aufzuwendenden Kosten.

Rotor und Stator sind bevorzugt in der Magnetspannvorrichtung angeordnet beziehungsweise dieser zugeordnet. Hierbei erweist es sich als günstig, wenn Stator und Rotor in oder unterhalb der Spannfläche angeordnet sind. Hierdurch wird die auch räumliche Nähe von Stator und Rotor zur Rotationsachse des elektrischen Rotationsantriebes sichergestellt. Werden Stator und Rotor in oder unterhalb der Spannfläche angeordnet, d.h. in den Aufbau der Spannfläche integriert, ergibt sich hieraus zudem eine stark kompaktierte Bauweise der Gesamtvorrichtung, die sich bei beengten Raumangeboten in Werkzeugmaschinen als vorteilhaft erweist.

In einer als weiter vorteilhaft angesehenen Ausführungsform der Magnetspannvorrichtung trägt der Rotor eine Antriebsplatte für die Spannbacke bzw. die Spannbacken. Diese Antriebsplatte weist dabei eine die lineare Bewegung der Spannbacke vermittelnde Führungskulisse, insbesondere eine Planspirale auf. Die in der Spannfläche aufgenommenen Spannbacken der Zentriervorrichtung sind durch die dort vorgesehenen Nuten, die eine Radialbewegung der Spannbacken in der Spannfläche zulassen, in ihrer Bewegung vorgegeben. Der Rotor des Rotationsantriebes trägt in dieser Ausführungsform der Magnetspannvorrichtung die Antriebsplatte, die bzw. deren Führungskulisse mit den Spannbacken in Eingriff steht.

Alternativ zu einem Tragen der gegebenenfalls auswechselbaren Antriebsplatte besteht auch die Möglichkeit und ist es in einer bevorzugten Ausführungsform vorgesehen, dass der Rotor als Antriebsplatte ausgebildet ist und der Stator des Rotationsantriebes dem antriebsplattenartig ausgeführten Rotor zugeordnet ist.

Die Spannbacke weist bevorzugt in ihrer der Antriebsplatte zugewandten Oberfläche eine in die Führungskulisse, insbesondere in eine Rillung der Planspirale eingreifende Verzahnung auf. Diese Verzahnung steht mit der Rillung der Planspirale in Eingriff. Eine Drehung der Planspirale bewirkt dabei eine lineare, d.h. je nach Ausbildung und Ausführungsform der Spannfläche radial zum Spannflächenzentrum ausgerichtete Bewegung der Spannbacken. Die Geometrie und Abmessung der Planspirale ist dabei auf die zu bewegenden Spannbacken abgestimmt.

Vorteilhaft erweist es sich in diesem Zusammenhang, wenn die Spannfläche wenigstens eine radiale Führungsnut für die Spannbacke aufweist.

Eine Weiterbildung der Magnetspannvorrichtung sieht vor, dass die Spannfläche Polsegmente aufweist und die jeweiligen Polsegmente durch Führungsnuten getrennt sind. In diesen Führungsnuten erfolgt dann eine bevorzugt radiale Führung der Spannbacken. Durch die Anzahl der Polsegmente wird die Anzahl an Führungsnuten vorgegeben, die mit Spannbacken besetzt werden können.

Eine weitere, vorteilhafte Weiterbildung der Magnetspannvorrichtung sieht vor, dass die Magnetspannvorrichtung zwei oder mehr, bevorzugt drei oder mehr Spannbacken aufweist. Diese Spannbacken, deren Anzahl auch durch die Ausformung des zu zentrierenden Werkstückes definiert wird, greifen beim Zentrieren insbesondere an dem Werkstück außen und/oder innen an. Es kann somit eine auf das Werkstück abgestimmte Zentrierung erfolgen. Weist das Werkstück eine innere Oberfläche auf, so kann durch Anlegen der Spannbacken an dieser Fläche die Zentrierung erfolgen. Gleichzeitig oder alternativ besteht die Möglichkeit, dass die Spannbacken am äußeren Umfang eines Werkstückes anliegen und hierüber die Zentierung sichergestellt wird.

Die Spannbewegung ist dabei bevorzugt relativ zur Rotationsachse gesehen radial nach außen oder radial nach innen gerichtet.

Um die Magnetspannvorrichtung für verschiedenste Einsatzbereiche und Werkstückausformungen verwenden zu können, wird es als günstig angesehen, wenn die Spannbacke als Grundbacke mit auf der Grundbacke positionierbarer, lösbar angeordnete Aufsatzbacke ausgebildet ist. Die Position und Art sowie Größe der Aufsatzbacke ist dabei auf der Grundbacke bevorzugt einstellbar. Vorteil dieser Ausführungsform ist es, dass in der Magnetspannvorrichtung eine Grundbackenart bzw. eine Größe oder Ausführungsform der Grundbacke verwendet werden kann, die über die jeweils zugeordnete Aufsatzbacke weiter funktionalisiert bzw. an das zu spannende oder zu zentrierende Werkstück angepasst wird. Dies kann in einfacher Art und Weise durch Austausch der Aufsatzbacke erfolgen. Eine Demontage der gesamten Magnetspannvorrichtung bzw. der Zentriervorrichtung zur Entnahme der Grundbacken bzw. der Spannbacken ist somit nicht notwendig.

Die Spannbacken sind bevorzugt zum Außen- oder Innenzentrieren des Werkstückes ausgebildet. Eine Synchronisierung der Radialbeabstandung der Spannbacken und/oder Spannmittel zur Drehachse der Spannvorrichtung und/oder dem zu zentrierenden Werkstück kann dabei über die Spannmittel erfolgen. Aufgrund der in der Magnetspannvorrichtung vorgesehenen Planspirale weisen gleiche Spannbacken unterschiedliche Beabstandungen zur Drehachse der Magnetspannvorrichtung auf. Die Synchronisierung der Radialbeabstandung der Spannbacken kann somit in einfacher Art und Weise durch Versetzen oder Verschieben der Aufsatzbacken erfolgen. Es entfällt somit die Zuverfügungstellung spezialisierter Spannbacken. Durch Positionierung der Aufsatzbacken kann ein Ausgleich oder Abgleich der Radialbeabstandung der Spannbacken bzw. Aufsatzbacken zur Drehachse der Magnetspannvorrichtung und/oder dem zu zentrierenden Werkstück durchgeführt werden, was den gesamten Aufbau der Magnetspannvorrichtung sowie deren Handhabung wesentlich vereinfacht.

Als vorteilhaft wird angesehen, wenn die Synchronisierung der Radialbeabstandung auch durch Aufsatzbacken oder Spannbacken mit unterschiedlicher radialer Erstreckung oder unterschiedlicher Dicke erfolgt. Ebenfalls möglich ist eine variable Positionierung der Aufsatzbacken auf den Spannbacken. Die Aufsatzbacken können dabei auch verschiedene Spannmittel tragen bzw. als Spannmittel ausgebildet sein, um in dem Werkstück oder an dem Werkstück anzugreifen bzw. in dieses einzugreifen und den Spann- oder Zentriervorgang wesentlich zu verbessern und zu vereinfachen und ein hochgenaues Zentrierergebnis zu erzielen. Die radiale Erstreckung, die Dicke oder die Positionierung der Spannbacken oder Aufsatzbacken sowie der daran unter Umständen angeordneten Spannmittel wird dabei durch die Position der Spannbacke auf der Planspirale vorgegeben.

Eine Einstellung der Radialbeabstandung bzw. Positionierung der Spannbacken wird in einer alternativen Ausführungsform über die Anpassung der Position der auf der Spannbacke für den Eingriff mit der Planspirale vorgesehene Verzahnung ermöglicht. Hierzu werden jeweils positionsdefinierte Spannbacken zur Verfügung gestellt, das heißt, Spannbacken, die eine Verzahnung aufweisen, die jeweils einer speziellen Position auf der Spannfläche bzw. der Planspirale zugeordnet sind und deren Verzahung derart ausgebildet ist, dass bei Einsatz von zwei oder mehr Spannbacken diese den gleichen radialen Abstand zur Rotationsachse bzw. zum Zentrum der Spannfläche aufweisen. Dadurch, dass die Spannbacken einen nur geringen Hub aufweisen, kann so der bevorzugte Durchmesserbereich für das zu spannende Werkstück eingestellt werden. Um einen korrekten Einsatz der jeweils auf die Planspiralenposition angepassten Spannbacke durchführen zu können, werden sowohl die Einsetzpositionen, als auch die Spannbacken selbst mit einer Markierung versehen. Die Spannbacken werden hierzu beispielsweise in eine klar definierte Führungsnut in der Spannfläche eingesetzt, um mit der Planspirale in Eingriff gebracht zu werden. Auch hier besteht die Möglichkeit einer Markierung der Einsatzposition der jeweiligen Spannbacke, um eine einheitliche Anfangspositionierung der Spannbacken zu gewährleisten.

Neben der vorgenannten Positionierung über eine Anpassung der Verzahnung an der Spannbacke besteht selbstverständlich auch die Möglichkeit, dass die Spannbacken verschiebbare oder versetzbare Aufsatzbacken tragen, um die Spannmittel an verschiedene Werkstückgeometrien bzw. -Formen weiter anzupassen.

In der vorgeschlagenen Magnetspannvorrichtung sind die Spannmittel bevorzugt als Elektro-Permanentmagnet oder Elektromagnet ausgebildet. Vorteilhaft an dieser Ausführungsform ist, dass eine Schaltung des Elektromagneten bzw. Elektro-Permanentmagneten nach der Zentrierung des Werkstückes erfolgt und die eigentliche Spannkraft allein durch die magnetischen Spannmittel in das Werkstück eingetragen werden. Den Spannbacken kommt somit lediglich eine zentrierende Funktion, nicht jedoch eine Haltefunktion zu.

Wie bereits zuvor ausgeführt, kann das Spannen des Werkstücks für die Bearbeitung hauptsächlich über die magnetischen Spannmittel realisiert werden. In einer alternativen Ausführungsform der Magnetspannvorrichtung ist vorgesehen, dass das Spannen zusätzlich oder alternativ nur über die Spannbacken der Zentriervorrichtung erfolgt. Der für die Linearbewegung der Spannbacken vorgesehene Rotationsantrieb wird in dieser Ausführungsform entsprechend angepasst, um ausreichend hohe Halte- bzw. Spannkräfte in das Werkstück einzutragen. Bei entsprechender Dimenstionierung des Rotationsantriebs kann auf das magnetische Spannen des Werkstücks verzichtet werden bzw. kann eine Kombination aus mechanischem und magnetischem Spannen erfolgen, um somit die Spannkräfte synergistisch nutzen zu können.

Die Zentriervorrichtung kann somit neben dem bloßen Zentrieren auch für ein Spannen des Werkstücks herangezogen werden. Dies erweist sich insbesondere dann als vorteilhaft, wenn nicht oder nur schwer magnetisierbare Werkstücke auf der Spannfläche gespannt werden sollen.

Als vorteilhaft wird angesehen, wenn der Zentriervorrichtung, dem Rotor, der Antriebsplatte, der Führungskulisse oder dem Rotationsantrieb wenigstens ein Positionssensor für die Spannbacke und/oder die Aufsatzbacke zugeordnet ist. Aus den mit dem Sensor ermittelten Werten kann dann die Position der Spannbacke und die somit für eine Spannung bzw. Freigabe des Werkstückes notwendige Verschiebung der Spannbacke oder der Aufsatzbacke abgeleitet werden. Die Bewegung der Elemente der Zentriervorrichtung, d.h. der Spannbacken kann somit auf ein Minimum reduziert werden. Dies führt zu einer weiteren Vereinfachung der Vorrichtung. Durch hochgenaue Positionsbestimmung werden unnötige Verfahrungen der Spannbacke vermieden. Ebenfalls ein fließen kann die Positionsermittlung in die Abstimmung der Spannbackenbewegung beim Spannen oder Zentrieren eines Werkstückes, das danach durch die elektromagnetischen Spannmittel bzw. die magnetisch wirkenden Spannmittel auf der Spannfläche aufgespannt werden soll. Die Zentriervorrichtung weist bevorzugt einen Kraftsensor auf, der insbesondere mit dem Rotationsantrieb gekoppelt ist. Aus der Leistungsaufnahme des Rotationsantriebes ist dadurch eine in das Werkstück eingetragene Spannkraft ableitbar. Eine als bevorzugt angesehene Weiterbildung registriert die Leistungsaufnahme des Motors und leitet darüber die in das Werkstück eingetragene Spannkraft ab.

Der Rotationsantrieb ist in einer bevorzugten Ausführungsform der Magnetspannvorrichtung als Synchron- oder Asynchronmotor ausgebildet. Die Ausbildung als Synchron- oder Asynchronmotor verbessert die Positionserfassung der Spannbacken, da hierbei unmittelbar aus der Rotation des Motors die Position der Spannbacke abgeleitet werden kann.

Eine als vorteilhaft angesehene Ausführungsform der erfindungsgemäßen Magnetspannvorrichtung sieht vor, dass eine Begrenzung der Spannkraft auf zwischen 50% und 90%, bevorzugt zwischen 60% und 80%, insbesondere bevorzugt auf 70% der Maximalkraft des Rotationsantriebes für das Zentrieren bzw. Spannen des Werkstückes durch den Rotationsantrieb zur Verfügung gestellt wird. Vorteil hierfür ist, dass somit eine Kraftreserve des Rotationsantriebes zur Verfügung steht, da in der Regel ein größeres Moment für die Öffnungsbewegung nach der Werkstückbearbeitung seitens des Motors zur Verfügung gestellt werden muss. Wird bereits bei dem Zentrieren bzw. Spannen der Spannmittel, d.h. der Spannbacken und/oder der Aufsatzbacken 100% der zur Verfügung stehenden Kraft des Rotationsantriebes aufgewendet, so können diese größeren Momente für die Öffnung der Zentriervorrichtung lediglich durch Überbeanspruchung des Rotationsantriebes zur Verfügung gestellt werden, was zu einem vorzeitigen Verschleiß der Gesamtvorrichtung bzw. insbesondere des Rotationsantriebes führt. Die Begrenzung der Maximalkraft kann in der Vorrichtungssteuerung hinterlegt werden. Für die Bestimmung wird entweder ein durch einen Kraftsensor ermittelter Wert oder aber ein Wert für die Leistungsaufnahme des Motors der anliegenden Motorströme herangezogen. Bei Erreichen der begrenzten Maximalkraft erfolgt bevorzugt die automatische Abschaltung des Antriebes. Hieraus ergibt sich der Vorteil, dass keine Überbeanspruchung des Rotationsantriebes erfolgt und somit die Standzeit der Magnetspannvorrichtung bzw. der Zentriervorrichtung wesentlich erhöht wird.

Es ist günstig, dass eine Positionsbestimmungsanordnung für die Lage des Rotors relativ zum Stator vorgesehen ist. Hierdurch ist mittelbar auch die Position der einzelnen, linear verschiebbaren Spannbacken bestimmbar. Da die Bewegungen der einzelnen Spannbacken von dem als Zentralantrieb dienenden Rotationsantrieb abgeleitet ist, kann somit auch mit einer Positionsbestimmungsanordnung die Lage aller Spannbacken bestimmt werden. Für die Ausgestaltung der Positionsbestimmungsanordnung gibt es mehrere alternative Vorschläge: Zunächst ist z.B. ein Drehgeber oder Drehsensor vorgesehen, dessen Signal über einen Schleifring oder über ein kontaktloses Übertragungssystem in die Steuerung übertragen wird. Als kontaktloses System wird hier z.B. eine Funkverbindung vorgeschlagen.

Da für die Ausgestaltung des Rotationsantriebes ein elektrisches Motorprinzip vorgesehen ist, kann aber auch eine sensorlose Positionsbestimmungsanordnung gewählt werden, bei welcher aus den Stellungen des Rotors relativ zum Stator und dem hierzu notwendigen Drehfeld beziehungsweise der Stromaufnahme der einzelnen Windungspakete des Elektromotors auf die Lage des Rotors relativ zum Stator zurückgeschlossen wird. Der Vorzug hierbei besteht darin, dass eine entsprechende Messung der Ströme der einzelnen Phasen des Drehfeldes und ein entsprechender Auswerte-Algorithmus ausreicht, um mit hoher Auflösung die Drehlage von Rotor zu Stator zu ermitteln. Auf die Anordnung eines separaten Sensors mit der damit verbundenen aufwändigen Übermittlungsstrecke der Sensorinformation (z.B. über Schleifring oder kontaktlos über Funk oder ähnlichem) kann hierbei dann vorteilhafter Weise verzichtet werden.

Eine vorteilhafte Weiterbildung der Magnetspannvorrichtung sieht vor, dass eine Steuerung für die magnetisch wirkenden Spannmittel vorgesehen ist.

Eine Weiterbildung der Magnetspannvorrichtung sieht vor, dass eine Steuerung für den Rotationsantrieb vorgesehen ist. Als vorteilhaft erweist es sich, wenn die Steuerung den Rotationsantrieb rückkoppelnd mit den von einem Positionssensor für die Spannbacke und/oder Aufsatzbacke, einem dem Rotationsantrieb zugeordneten Kraftsensor bzw. der Leistungsaufnahme des Rotationsantriebs und/oder der eingeleiteten Motorströme ausgegebenen Werten steuert und die definierte maximale Leistungsabgabe koordiniert beziehungsweise regelt. Des Weiteren ist auch vorgesehen, dass die Steuerung die Werte, die durch die Positionsbestimmungsanordnung für die Lage des Rotors relativ zum Stator zur Verfügung gestellt werden, für die Steuerung beziehungsweise Regelung des Rotationsantriebes einsetzt.

Eine weitere bevorzugte Ausführungsform der Magnetspannvorrichtung sieht vor, dass die Steuerung für die magnetisch wirkenden Spannmittel und den Rotationsantrieb kombiniert vorliegen. Hierzu kann eine zentrale Steuerung für die gesamte Magnetspannvorrichtung vorgesehen werden, die sowohl die magnetisch wirkenden Spannmittel, als auch den Rotationsantrieb steuert. Vorgesehen werden kann hierbei eine Steuerkaskade, das heißt, zunächst wird die Steuerung des Rotationsantriebes gewährleistet, wonach bei Erreichen einer Zentrierposition oder eine Spann- oder Haltekraft an den mechanischen Spannmitteln eine Aktivierung der magnetisch wirkenden Spannmittel erfolgt, beispielsweise indem die Steuerung den Elektromagneten schaltet, wonach dann ein magnetisches Spannen durchgeführt wird. Ebenfalls durch die Steuerung wird eine Freigabe des Werkstückes gesteuert.

Eine bevorzugte Weiterbildung sieht vor, dass die Steuerung für die magnetisch wirkenden Spannmittel und/oder den Rotationsantrieb bzw. die Kombination aus beiden Steuerungen in eine übergeordnete Bearbeitungsmaschinensteuerung integriert ist. Vorteil hiervon ist, dass eine zentrale Steuerung für die gesamte Bearbeitungsmaschine bzw. ein Bearbeitungszentrum zur Verfügung gestellt werden kann und die Schritte der Werkstückpositionierung bzw. Zentrierung, des Werkstückspannens und des nachgeordneten Bearbeitens durch eine einzige Steuerung koordiniert wird.

Des Weiteren umfasst die Erfindung auch ein Verfahren für das zentrierte, magnetische Spannen eines Werkstückes, insbesondere mit einer Magnetspannvorrichtung wie eingangs beschrieben, wobei ein elektromagnetisch oder elektro-permanentmagnetisch wirkendes Spannmittel und eine, einen elektrischen Rotationsantrieb aufweisende Zentriervorrichtung vorgesehen ist. Sowohl das Spannmittel, wie auch die Zentriervorrichtung sind jeweils mit einer eigenen Stromzuleitung ausgestattet, wobei erfindungsgemäß zuerst die Stromzuleitung der Zentriervorrichtung mit Strom beaufschlagt wird, und hernach die Stromzuleitung der beziehungsweise des Spannmittel/s mit Strom beaufschlagt wird. Der Vorzug dieses erfindungsgemäßen Verfahrens liegt insbesondere darin, dass mit einer Energieform, nämlich mit elektrischem Strom, sowohl das anfängliche Zentrieren mit Hilfe der Zentriervorrichtung, wie auch das nachfolgende Spannen mit der elektromagnetischen beziehungsweise elektro-permanentmagnetischen Spannmittel bewirkt wird. Da beide Operationen zeitlich voneinander versetzt erfolgen, resultiert durch diese erfindungsgemäße Verfahrensweise eine gleichmäßige Leistungaufnahme und daraus resultierend, geringere notwendige Kabeldurchmesser. Auch müssen für die verschiedenen Operationen nicht unterschiedliche Energieformen zur Verfügung gestellt werden. Das erfindungsgemäße Verfahren trägt zu einem kostengünstigen Betrieb entsprechend ausgestatteter Magnetspannvorrichtungen erheblich bei.

In diesem Zusammenhang wird insbesondere darauf hingewiesen, dass alle in Bezug auf die Magnetspannvorrichtung beschriebenen Merkmale und Eigenschaften, aber auch Verfahrensweisen sinngemäß auch bezüglich der Formulierungen des erfindungsgemäßen Verfahrens für das zentrierte, magnetische Spannen eines Werkstückes übertragbar und im Sinne der Erfindung einsetzbar sind und als mit offenbart gelten. Gleiches gilt auch in umgekehrter Richtung. Das bedeutet, nur in Bezug auf das Verfahren für das zentrierte, magnetische Spannen eines Werkstückes genannte, bauliche, also vorrichtungsgemäße Merkmale können auch im Rahmen der Ansprüche für die Magnetspannvorrichtung berücksichtigt und beansprucht werden, und zählen ebenfalls zur Offenbarung.

In der Zeichnung ist die Erfindung insbesondere in einem Ausführungsbeispiel schematisch dargestellt. Es zeigen:
- Fig. 1: eine bevorzugte Ausführungsform der erfindungsgemäßen Magnetspannvorrichtung
- Fig. 2: eine weitere bevorzugte Ausführungsform der erfindungsgemäßen Magnetspannvorrichtung mit aufgesetztem Werkstück,
jeweils in seitlicher Schnittdarstellung.

In den Figuren sind gleiche oder einander entsprechende Elemente jeweils mit den gleichen Bezugszeichen bezeichnet und werden daher, sofern nicht zweckmäßig, nicht erneut beschrieben.

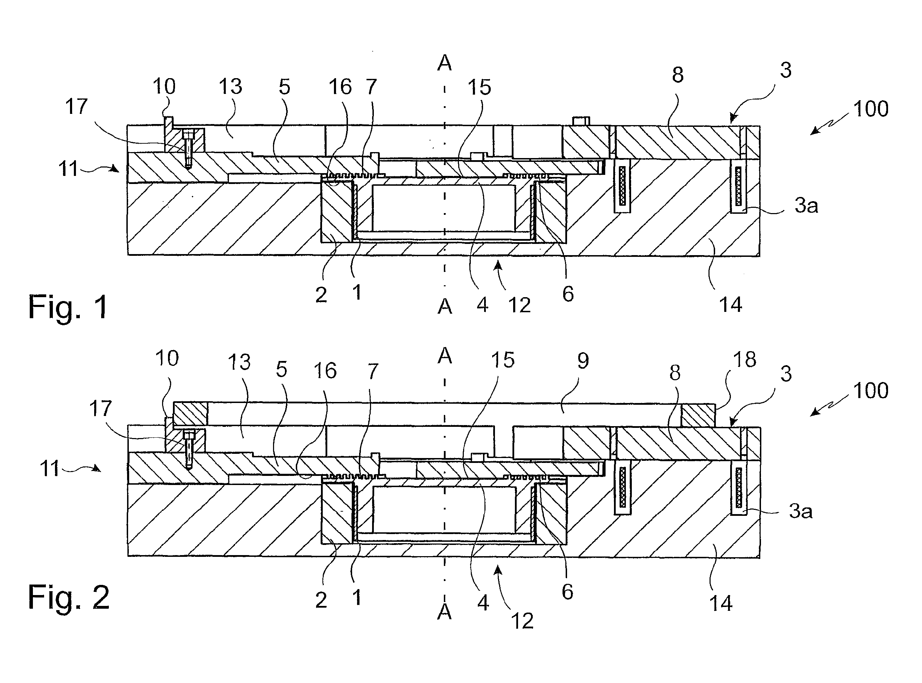

Fig. 1 zeigt eine bevorzugte Ausführungsform der Magnetspannvorrichtung 100. Diese verfügt über eine Spannfläche 3, die mit wenigstens einen magnetisch wirksamen Spannmittel 3a zusammenwirkt, um das Aufspannen eines Werkstückes 9 zu gewährleisten.

Der Magnetspannvorrichtung 100 zugeordnet ist eine Zentriervorrichtung 11. Diese ist gebildet aus einer Spannbacke 5, die mit einer Aufsatzbacke 10 versehen ist. Die Aufsatzbacke 10 dient als Spannmittel, um ein Werkstück 9 (vgl. Fig. 2) auf der Spannfläche 3 zu positionieren. Die Spannfläche 3 wird gebildet aus mehreren Polsegmenten 8. Die Polsegmente 8 sind durch Führungsnuten 13 getrennt. In den Führungsnuten 13 geführt ist die Spannbacke 5 mit Aufsatzbacke 10. Die Radialverschiebung der Spannbacke 5 wird bewerkstelligt durch einen Rotationsantrieb 12, der zentral unterhalb der Spannfläche 3 in der Magnetspannvorrichtung 100 vorgesehen ist. Der Rotationsantrieb 12, bei dem es sich um einen Elektromotor handelt, der als Synchron- oder Asynchronmotor ausgebildet sein kann, weist einen Stator 2 und einen Rotor 1 auf. Der Stator 2 ist im Tragsockel 14 der Magnetspannvorrichtung 100 integriert. Der Rotor 1 trägt an seiner der Spannfläche 3 zugeordneten Oberseite 15 eine Antriebsplatte 4 für die Spannbacken 5. Diese Antriebsplatte 4 trägt eine Planspirale 6, die mit einer korrespondierenden Verzahnung 7 auf der der Antriebsplatte 4 zugewandten Unterseite 16 der Spannbacke 5 in Eingriff steht. Durch Rotation der Antriebsplatte 4, vermittelt über den Rotor 1, kommt es, aufgrund der Ausprägung der Planspirale 6, zu einer radialen Bewegung der Spannbacke 5. Mit der in Fig. 1 dargestellten Magnetspannvorrichtung 100 kann somit aus einer Rotationsbewegung des Rotationsantriebs 12 eine lineare Bewegung der Spannbacken 5 abgeleitet werden. Notwendig ist lediglich ein einziger Rotationsantrieb 12, um diese Bewegung zu realisieren.

Mit den Spannbacken 5 erfolgt eine Zentrierung des in Fig. 2 dargestellten Werkstücks 9. Die Aufsatzbacke 10 liegt dabei am äußeren Umfang 18 des Werkstückes 9 an und bei Bewegung der Spannbacke 5 verschiebt diese das Werkstück 9 bzw. zentriert es auf der Spannfläche 3, bevor die magnetischen Spannmittel 3a, die im Ausführungsbeispiel als schaltbare Elektromagnete ausgebildet sind, ein Spannen des Werkstückes 9 auf der Spannfläche 3 durchführen. Da bei Zentrierung des Werkstückes 9 noch keine Magnetbeaufschlagung der Spannfläche 3 stattfindet, reicht die durch den Rotationsantrieb 12 eingetragene Kraft aus, um die Zentrierung des Werkstückes 9 durchzuführen. Die Magnetspannvorrichtung 100 verfügt im Einbaustatus über mehrere Spannbacken 5. Drei solcher Spannbacken 5 reichen in der Regel aus, um eine zufriedenstellende Zentrierung des Werkstückes 9 durchzuführen.

Aufgrund dessen, dass die Spannbacken 5 durch eine Planspirale 6 geführt werden, ergeben sich unterschiedliche radiale Abstände zur Drehachse A der Magnetspannvorrichtung 100 bzw. des Rotationsantriebs 12. Um hier einen Ausgleich zu schaffen, sind die Aufsatzbacken 10 variabel auf den Spannbacken 5 anordenbar. Die Aufsatzbacken 10 sind im Ausführungsbeispiel der Fig. 1 und 2 über die Schraube 17 mit den Spannbacken 5 verbunden. Alternativ besteht die Möglichkeit, dass hier eine Steck-, Clips-, Rast- oder sonstige Verbindung erfolgt, um die Aufsatzbacken 10 zu fixieren. Die Aufsatzbacken 10 dienen gleichzeitig als Spann- bzw. Zentriermittel für die Werkstücke 9. Die Aufsatzbacken 10 überragen die Ebene der Spannfläche 3 teilweise und können daher am Umfang 18 eines dort aufgesetzten oder aufgelegten Werkstückes 9 angelegt werden. Alternativ bestünde bei entsprechender Ausgestaltung des Werkstückes 9 die Möglichkeit, dass die Spannbacken 5 bzw. Aufsatzbacken 10 oder daran angebrachte Spannmittel (nicht dargestellt) von innen an dem Werkstück 9 angreifen, um die Zentrierung durchzuführen.

Die erfindungsgemäße Magnetspannvorrichtung wird zum Beispiel für die radiale Innen- oder Außenbearbeitung von Werkstücken, zum Beispiel bei einer Drehbank (stehend oder liegend angeordnet) eingesetzt. Dabei rotiert die Magnetspannvorrichtung 100 um ihre Drehachse A. Vorteilhafter Weise ist dabei die Drehachse A der Magnetspannvorrichtung zumindest parallel, wenn nicht sogar identisch mit der Rotationsachse A des Rotationsantriebes 12.

Die in Fig. 2 dargestellte Magnetspannvorrichtung 100 entspricht der in Fig. 1 Dargestellten in allen Details. Lediglich das hier auf der Magnetspannvorrichtung 1 vorgesehene Werkstück 9 ist in Fig. 1 nicht gezeigt. Die Funktionsweise der beiden hier dargestellten Magnetspannvorrichtungen 100 ist identisch.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, dass das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Es ist weiter zu beachten, dass die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Magnetspannvorrichtung mit einer Spannfläche, wenigstens einem magnetisch wirkenden Spannmittel zum Aufspannen eines Werkstückes auf der Spannfläche und einer Zentriervorrichtung zum Zentrieren des Werkstückes mit zwei oder mehr in der Spannfläche verschiebbaren Spannbacken, **dadurch gekennzeichnet, dass** der Zentriervorrichtung (11) ein einen Stator (2) und einen Rotor (1) aufweisender elektrischer Rotationsantrieb (12) mit einer Rotationsachse (A) zugeordnet ist und die Zentriervorrichtung (11) Mittel zum Ableiten von linearen Spannbackenbewegungen aus einer Rotationsbewegung des Rotationsantriebes (12) aufweist, und die linearen Spannbackenbewegungen senkrecht zur Rotationsachse (A) sind.

2. Magnetspannvorrichtung nach Anspruch 1, **dadurch gekennzeichnet, dass** Rotor (1) und Stator (2) in der Magnetspannvorrichtung (100) angeordnet sind und/oder der Stator (2) und der Rotor (1) in oder unterhalb der Spannfläche (3) angeordnet sind.

3. Magnetspannvorrichtung nach einem der vorhergehenden Ansprüche, **dadurch gekennzeichnet, dass** die Ableitung der linearen Spannbackenbewegung senkrecht zur Rotationsachse (A) vorgesehen ist.

4. Magnetspannvorrichtung nach einem der vorhergehenden Ansprüche, **dadurch gekennzeichnet, dass** der Rotor (1) eine Antriebsplatte (4) für die Spannbacke (5) trägt, wobei die Antriebsplatte (4) eine die lineare Bewegung der Spannbacke (5) vermittelnde Führungskulisse, insbesondere eine Planspirale (6) aufweist.

5. Magnetspannvorrichtung nach einem der vorhergehenden Ansprüche, **dadurch gekennzeichnet, dass** der Rotor (1) als Antriebsplatte (4) ausgebildet ist und/oder die Spannbacke (5) in ihrer der Antriebsplatte (4) zugewandten Oberfläche eine in die Führungskulisse, insbesondere eine Rillung der Planspirale (6) eingreifende Verzahnung (7) aufweist.

6. Magnetspannvorrichtung nach einem der vorhergehenden Ansprüche, **dadurch gekennzeichnet, dass** die Spannfläche (3) wenigstens eine radiale Führungsnut (13) für die Spannbacke (5) aufweist und/oder dass die Spannfläche (3) Polsegmente (8) aufweist wobei die Führungsnut (13) zwischen den Polsegmenten (8) vorgesehen ist.

7. Magnetspannvorrichtung nach einem der vorhergehenden Ansprüche, **dadurch gekennzeichnet, dass** die Magnetspannvorrichtung (100) zwei oder mehr Spannbacken (5) aufweist, insbesondere wobei die Spannbacken (5) beim Zentrieren an dem Werkstück (9) außen und/oder innen angreifen und/oder dass eine relativ zur Rotationsachse (A) gesehen radial nach außen oder radial nach innen gerichtete Spann- und/oder Zentrierbewegung vorgesehen ist.

8. Magnetspannvorrichtung nach einem der vorhergehenden Ansprüche, **dadurch gekennzeichnet, dass** die Spannbacke (5) als Grundbacke mit auf der Grundbacke positionierbarer, lösbar angeordneter Aufsatzbacke (10) ausgebildet ist, wobei die Position der Aufsatzbacke (10) auf der Grundbacke einstellbar ist.

9. Magnetspannvorrichtung nach einem der vorhergehenden Ansprüche, **dadurch gekennzeichnet, dass** die Spannbacken (5) zum Außen- oder Innenzentrieren des Werkstückes (9) ausgebildet sind und eine Synchronisierung der Radialbeabstandung der Spannbacken (5) und/oder Aufsatzbacken (10) zur Drehachse (A) der Magnetspannvorrichtung und/oder dem zu zentrierenden Werkstück (9) über die Aufsatzbacke (10) vorgesehen ist, insbesondere wobei die Synchronisierung der Radialbeabstandung durch Aufsatzbacken (10) oder Spannbacken (5) mit unterschiedlicher radialer Erstreckung oder unterschiedlicher Dicke oder durch variable Positionierung der Aufsatzbacken (10) auf den Spannbacken (5) vorgesehen ist, insbesondere wobei die radiale Erstreckung, die Dicke oder die Positionierung der Spannbacken (5) oder Aufsatzbacken (10) durch die Position der Spannbacke (5) auf der Planspirale (6) vorgegeben ist.

10. Magnetspannvorrichtung nach einem der vorhergehenden Ansprüche, **dadurch gekennzeichnet, dass** die magnetisch wirkenden Spannmittel als Elektro-Permanentmagnet oder Elektromagnet ausgebildet sind und/oder der Rotationsantrieb (12) als Synchron- oder Asynchronmotor ausgebildet ist.

11. Magnetspannvorrichtung nach einem der vorhergehenden Ansprüche, **dadurch gekennzeichnet, dass** der Zentriervorrichtung (11), dem Rotor (1), der Antriebsplatte (4), der Führungskulisse oder dem Rotationsantrieb (12) ein Positionssensor für die Spannbacke (5) und/oder die Aufsatzbacke (10) zugeordnet ist und/oder die Zentriervorrichtung (11) einen Kraftsensor aufweist, insbesondere wobei der Kraftsensor mit dem Rotationsantrieb (12) gekoppelt ist und/oder eine in das Werkstück eingetragene Spannkraft aus der Leistungsaufnahme des Rotationsantriebes (12) bzw. der eingeleiteten Motorströme ableitbar ist, und/oder eine für die Verschiebung der Spannbacken (5) durch den Rotationsantrieb (12) zur Verfügung gestellte Kraft auf 50% bis 90%, insbesondere 60% bis 80%, bevorzugt 70% der durch den Rotationsantrieb (12) zur Verfügung stellbare Maximalkraft zum Zentrieren des Werkstückes (9) begrenzt ist.

12. Magnetspannvorrichtung nach einem der vorhergehenden Ansprüche, **gekennzeichnet durch** eine Positionsbestimmungsanordnung für die Lage des Rotors (1) relativ zum Stator (2), wobei insbesondere für die Positionsbestimmungsanordnung ein Drehgeber, ein Drehsensor oder eine sensorlose Positionsbestimmungsanordnung vorgesehen ist.

13. Magnetspannvorrichtung nach einem der vorhergehenden Ansprüche, **dadurch gekennzeichnet, dass** eine Steuerung für die magnetisch wirkenden Spannmittel (3a) und/oder eine Steuerung für den Rotationsantrieb (12) vorgesehen ist, wobei insbesondere die Steuerung den Rotationsantrieb (12) rückkoppelnd mit den
- durch einen Positionssensor für die Spannbacken (5) und/oder Aufsatzbacken (10) zur Verfügung gestellten Werten
- durch die Positionsbestimmungsanordnung für die Lage des Rotors (1) relativ zum Stator (2), zur Verfügung gestellten Werten
- durch einen, dem Rotationsantrieb (12) zugeordneten Kraftsensor, der die Werte der Leistungsaufnahme des Rotationsantriebes (12) und/oder der eingetragenen Motorströme zur Verfügung stellt, steuert.

14. Magnetspannvorrichtung nach einem der vorhergehenden Ansprüche, **dadurch gekennzeichnet, dass** die Steuerung für die magnetisch wirkenden Spannmittel (3a), die Steuerung für den Rotationsantrieb (12) und/oder die kombinierte Steuerung für magnetisch wirkende Spannmittel (3a) und Rotationsantrieb (12) in eine übergeordnete Steuerung, insbesondere die Steuerung einer Bearbeitungsmaschine oder eines Bearbeitungszentrums integriert ist.

15. Verfahren für das zentrierte, magnetische Spannen eines Werkstückes, insbesondere mit einer Magnetspannvorrichtung (100) nach einem der vorhergehenden Ansprüche, wobei ein elektromagnetisch oder elektropermanentmagnetisch wirkendes Spannmittel (3a) und eine, einen elektrischen Rotationsantrieb (12) aufweisende Zentriervorrichtung (11) vorgesehen ist, welche jeweils mindestens eine Stromzuleitung aufweist und zuerst die Stromzuleitung der Zentriervorrichtung (11) mit Strom beaufschlag wird und hernach die Stromleitung der/des Spannmittel/s (3a) mit Strom beaufschlagt wird.
